Europäisches Patentamt

European Patent Office

Office européen des brevets

(19)

(11) Veröffentlichungsnummer: **0 117 297
B1**

# (12) EUROPÄISCHE PATENTSCHRIFT

(45) Veröffentlichungstag der Patentschrift:
22.04.87

(21) Anmeldenummer: 83111865.8

(22) Anmeldetag: 26.11.83

(51) Int. Cl.⁴: **F 23 K 3/00**, B 65 G 65/44

(54) Beschickungsvorrichtung für Stroh-Verbrennungsanlagen.

(30) Priorität: 25.01.83 DE 3302380

(43) Veröffentlichungstag der Anmeldung:
05.09.84 Patentblatt 84/36

(45) Bekanntmachung des Hinweises auf die Patenterteilung:
22.04.87 Patentblatt 87/17

(84) Benannte Vertragsstaaten:
AT DE FR GB SE

(56) Entgegenhaltungen:
EP - A - 0 033 753
EP - A - 0 056 425
DE - A - 2 813 785
DE - A - 3 000 671
FR - A - 2 420 912
GB - A - 2 070 401
US - A - 2 539 780

(73) Patentinhaber: GEBRÜDER WELGER GmbH & Co. KG,
Gebrüder-Welger-Strasse 3, D-3340 Wolfenbüttel (DE)

(72) Erfinder: Simonis, Jürgen, Wielandweg 4,
D-3340 Wolfenbüttel (DE)
Erfinder: Sacht, Hans-Otto, Dr.-Ing.,
Hermann-Löns-Weg 18, D-3340 Wolfenbüttel (DE)

## Beschreibung

Die Erfindung betrifft eine Beschickungsvorrichtung für Stroh-Verbrennungsanlagen mit einer Ballenvorratseinrichtung und einem Ballenauflöser, welcher das aufgelöste Stroh durch eine Einfüllöffnung einem horizontalen Presskanal senkrecht zu dessen Längsrichtung zuführt, in dem ein Kolben hin- und herbewegbar ist, welcher das aufgelöste Stroh verdichtet und zum Verbrennungsofen fördert, wobei die Bewegungen von Ballenauflöser und Kolben zeitlich aufeinander abgestimmt sind.

Eine derartige Vorrichtung lässt sich der DE-A 3 005 039 entnehmen. Hierbei schiebt eine Förderkette die auf ihr liegenden Ballen zu einem senkrecht zur Zuführrichtung der Ballen auf- und abbewegbaren Ballenportionierer, der von dem vorderen Ballen eine Strohschicht absticht und von oben in den Presskanal drückt. Der Ballenportionierer verschliesst die Einfüllöffnung des Presskanals so lange, bis der Kolben das vorverdichtete Stroh aus dem Bereich der Einlassöffnung geschoben hat. Bei jedem Kolbenrückhub wird die Förderkette um ein konstantes Mass vorgerückt.

Als nachteilig hat sich bei einer derartigen Vorrichtung gezeigt, dass sich in Abhängigkeit von der Dicke der abgestochenen Schicht ungleichmässige Ausstosslängen der Presspackungen ergeben. Möglichst gleichmässige Presspackungslängen sind jedoch Bedingung für eine gleichmässige und vollständige Strohverbrennung. Der Nachteil ist nicht nur bedingt durch die gesteuerte Zuordnung der Ballenzuführung zum Ballenportionierer, sondern auch durch das Prinzip, einen Strohballen durch Abstechen einzelner Schichten mittels einer Schneidkante zu portionieren und die Schichten in den Presskanal zu drücken. Ein in einer konventionellen Hochdruck-Kolbenpresse geformter Strohballen setzt sich aus einzelnen gepressten Halmgutpackungen zusammen, die bereits untereinander unterschiedliche Dichten und Dicken aufweisen können, so dass selbst beim Abstechen zwischen den Packungen, was mit dieser Vorrichtung nicht praktikabel ist, schon Abweichungen auftreten würden. Beim Abstechen in der Packung wirkt die verflochtene Halmgutstruktur dem Trennen entgegen, so dass die Packung nicht in dem vorbestimmten Raum nach unten in den Presskanal vorverdichtet wird, sondern seitlich ausbricht, was eine ungleiche Befüllung des Presskanals und unterschiedliche Packungslängen zur Folge hat.

Kratzplatten zum Auflösen von Ballen aus Stroh sind an sich bekannt. In der EP-A-56 425 ist ein Ballenauflöser dargestellt und beschrieben, der durch eine Anzahl von Messerwalzen gebildet ist, die um horizontale Achsen drehbar und nebeneinander am Boden eines vertikalen Aufnahmebehälters für Grossballen angeordnet sind. Jede Messerwalze weist auf ihrem Umfang verteilt Messer auf, die den Ballen abfräsen. Nachteilig ist, dass der Ballen keine formschlüssige Führung hat, so dass die Auflösung unregelmässig erfolgt und eine zusätzliche Dosierwalze zwischen Fräswalze und Presskolben erforderlich ist. Ferner wickelt das Stroh um die Walzen und verursacht Betriebsstörungen.

Eine ständig um eine horizontale Drehachse rotierende Kratzplatte mit Messern ist aus der FR-A-2 420 912 bekannt. Diese wirkt mit feststehenden Gegenmessern zusammen, um das Stroh zu häckseln, so dass das Stroh anschliessend beispielsweise mit Natronlauge aufgeschlossen werden kann.

Der Erfindung liegt die Aufgabe zugrunde, eine Beschickungsvorrichtung der eingangs erläuterten Art so auszubilden, dass bei jeder Art und jedem Zustand des Materials unabhängig von der Ballendichte eine störungsfreie, gleichmässige und kraftsparende Materialabtrennung vom Ballen und eine gute Befüllung des Presskanals gewährleistet ist, damit bei jedem Kolbenhub eine gleiche Packungslänge erzielt wird.

Diese Aufgabe wird gemäss der Erfindung dadurch gelöst, dass seitlich neben dem Presskanal ein vertikaler Schacht zur Strohballenaufnahme angeordnet ist und unterhalb des Schachtes eine um eine vertikale Achse hin und her drehbare Kratzplatte mit in nur einer Drehrichtung wirksamen Reisszähnen zum Angriff am darüberliegenden Strohballen vorgesehen ist, welche bei der Zurückbewegung des Kolbens aus seiner vorderen Stellung in die hintere Stellung das Stroh von der Ballenunterseite abschürft und durch die Einfüllöffnung in den Presskanal schiebt. Bei einer derartigen Anordnung liegt ein in dem vertikalen Schacht durch sein Eigengewicht selbsttätig nachrückender Strohballen direkt auf der Kratzplatte, deren Reisszähne unmittelbar von unten in die Ballenstirnfläche einstechen und eine bestimmte Strohmenge losreissen, mitnehmen und ohne wesentliche Verdichtung in den leeren Presskanal schieben, was eine gleichmässige Befüllung des Presskanals als Voraussetzung für gleiche Presspackungslänge bei jedem Kolbenhub gewährleistet.

Günstige Eingriffsverhältnisse in den Strohballen und eine sichere Mitnahme der losgerissenen Strohmenge ergeben sich, wenn die Reisszähne der Kratzplatte als spitze Reisszinken ausgebildet sind, die in spitzem Winkel in die abzulösende Ballenoberfläche eingreifen.

Da die Kratzplatte ebenso wie der Kolben eine Hin- und Herbewegung ausführt, lässt sich ein einfacher, betriebssicherer und wartungsarmer Antrieb dadurch erzielen, dass der Antrieb der Kratzplatte in einer bevorzugten Ausführungsform mit dem Kolbenantrieb mechanisch gekoppelt ist. Für eine gute Befüllung des Presskanals ist es zweckmässig, wenn die Kratzplatte bei hinterer Kolbenstellung eine Lage einnimmt, in der eine Reisszinkengruppe in den Presskanal hineinragt und die Förderrichtung einer weiteren Reisszinkengruppe etwa senkrecht zur Presskanallängsrichtung verläuft.

Damit das an der Messerkante abgetrennte Stroh im Zylinderraum nicht zu unerwünschten Ansammlungen führt, die Ursache von Funktionsstörungen sein können, schlägt die Erfindung vor, dass die Kratzplatte während der Bewegung des Kolbens in seine vordere Stellung eine Lage einnimmt, in der sich wenigstens ein Reisszinken seitlich benachbart zu einem am vorderen Ende der Einfüllöffnung an der Deckenwand befestigten, mit dem Kolben zusammenwirkenden Messer befindet, und dass dieser Reisszinken bei seiner Rückbewegung etwa am Messer hängendes Stroh erfasst und erneut zur Einfüllöffnung fördert.

Ein weiteres Merkmal schlägt vor, dass sich der Zylinderraum seitlich an den Presskanal anschliesst und in die Einfüllöffnung des Presskanals mündet. Hierdurch ist eine kompakte, raumsparende Bauweise möglich.

Da die Befüllung eines Presskanals ausser von der Zuführung und der Grösse der Einfüllöffnung auch von dem Presskanalquerschnitt abhängt, lässt sich bei einem vorgegebenen Beschickungsrohrquerschnitt der Feuerungsanlage die Befüllung dadurch günstig beeinflussen, dass der Presskanalquerschnitt im Bereich der Einfüllöffnung nach oben vergrössert ist und im Anschluss an die Einfüllöffnung durch ein als Gegenschneide ausgebildetes und mit dem Kolben zusammenwirkendes Übergangsstück auf Beschickungsrohrquerschnitt verkleinert ist.

Weitere vorteilhafte Weiterbildungen sind in den Unteransprüchen dargelegt.

Die Erfindung ist nachfolgend anhand eines in der Zeichnung gezeigten Ausführungsbeispiels näher erläutert. Es zeigen:

Fig. 1 eine Seitenansicht der erfindungsgemässen Vorrichtung bei hinterer Kolbenstellung mit einem senkrechten Querschnitt durch den Zylinderraum entlang der Schnittlinie C–D in Fig. 4.

Fig. 2 einen senkrechten Querschnitt bei vorderer Kolbenstellung entlang der Schnittlinie A–B in Fig. 3.

Fig. 3 eine Draufsicht auf die gesamte Vorrichtung bei vorderer Kolbenstellung.

Fig. 4 eine Draufsicht bei hinterer Kolbenstellung.

Die Beschickungsvorrichtung besteht aus einem vertikalen Schacht 1 mit rechteckigem Querschnitt zur Aufnahme von Strohballen 2, insbesondere konventioneller, rechteckiger Hochdruckpressballen mit einem Gewicht in der Grössenordnung von 30 kg und einer Querabmessung von etwa 0,40 × 0,50 m. Der Schachtquerschnitt ist etwas grösser bemessen, so dass ein in Längsrichtung eingeführter Strohballen 2 nach unten gleiten kann, im Schacht 1 aber nicht drehbar ist. Zur oberen Schachtmündung führt eine nicht dargestellte Rampe mit einem angetriebenen Kratzboden zur Beförderung der Strohballen 2 in den Schacht 1.

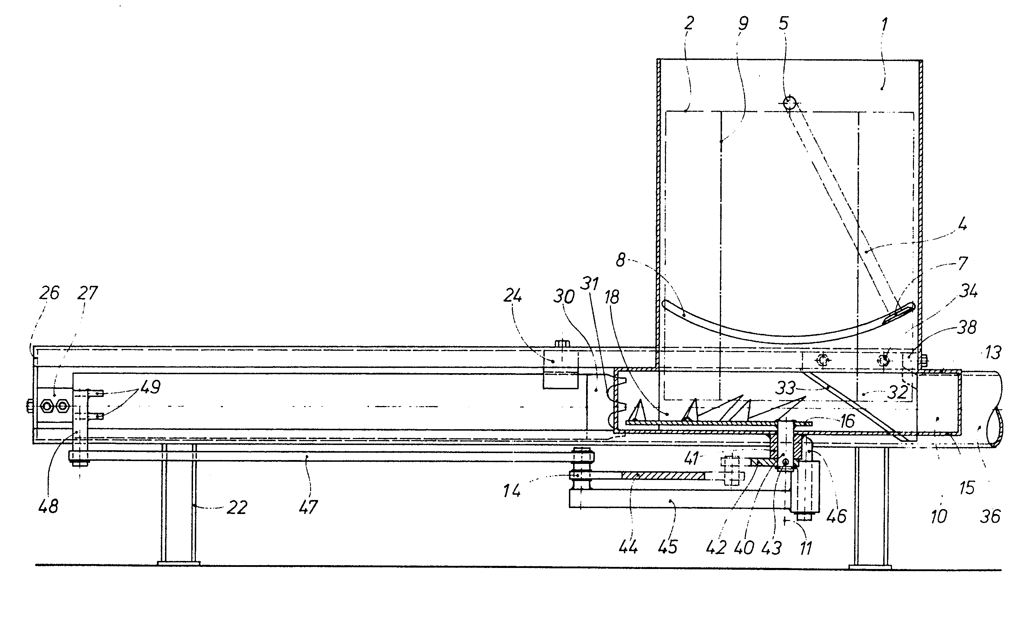

An einer Schachtwand 3 ist eine Stange 4 um einen hochgelegenen horizontalen Bolzen 5 pendelnd aufgehängt. Das untere, freie Stangenende endet kurz oberhalb einer unteren Schachtöffnung 6 und trägt eine Messerklinge 7, die durch einen entlang des Pendelweges verlaufenden Wandungsschlitz 8 in den Schacht 1 hineinragt, so dass eine in strichpunktierten Linien dargestellte Ballenumschnürung 9 (Fig. 1) während der Pendelbewegung durch die Messerklinge 7 aufgetrennt wird. Der Antrieb der Stange 4 erfolgt in später noch beschriebener Weise.

Der Schacht 1 mündet nach unten in einen Zylinderraum 10 mit vertikaler Mittelachse 11, der etwa koaxial zur Schachtlängsachse liegt und dessen Zylindermantel 12 auf seinem ganzen Umfang ausserhalb des rechteckigen Schachtquerschnittes verläuft. Die obere Stirnfläche 13 des Zylinderraumes 10 weist eine der Schachtöffnung 6 entsprechende Durchlassöffnung für den Strohballen 2 auf, während unmittelbar oberhalb der unteren, geschlossenen Stirnfläche 15 eine später noch im einzelnen beschriebene Kratzplatte 16 angeordnet ist.

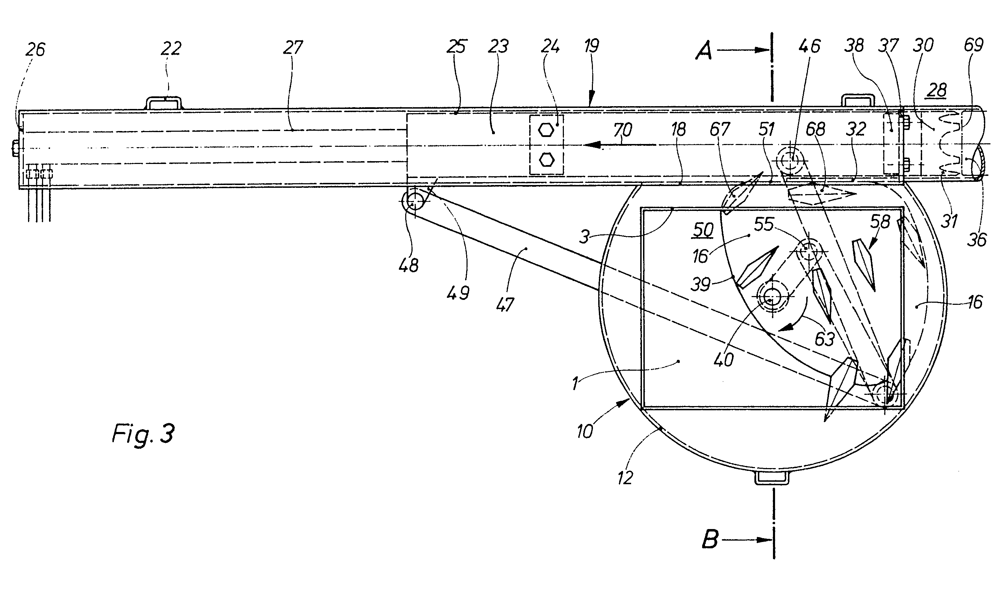

Von dem Zylinderraum 10 ist ausserhalb des Schachtes 1 parallel und in geringem Abstand zur Schachtwand 3 ein Zylindersegment weggeschnitten (Fig. 3), so dass in vertikaler Ebene eine rechteckförmige Öffnung entsteht, die mit einer gleichgrossen Einfüllöffnung 18 eines sich seitlich an den Zylinderraum 10 anschliessenden, horizontalen Presskanales 19 zusammenfällt, dessen Längsrichtung parallel zur Einfüllöffnung 18 verläuft. In dem Presskanal 19 ist ein Kolben 23 mit rundem Querschnitt angeordnet. Der Zylinderraum 10 und der Presskanal 19 weisen vertikale Stützfüsse 22 auf. Der Presskanal 19 weist einen hinteren und einen vorderen Abschnitt auf. Der hintere Abschnitt, der sich von einer Stirnseite 26 bis zum Ende der Einfüllöffnung 18 erstreckt, besitzt einen Querschnitt, der aus einer halbzylindrischen Bodenwand 20 und einer U-förmig nach unten abgekanteten Deckenwand 17 gebildet ist. Die Bodenwand liegt nahe unterhalb der unteren Stirnfläche 15, während die Deckenwand 17 über der oberen Stirnfläche 13 liegt. Eine der Einfüllöffnung 18 gegenüberliegende Seitenwand 21 verbindet die Bodenwand 20 mit der Deckenwand 17. Auf der Einfüllöffnungsseite besitzt der hintere Presskanalabschnitt zwischen Bodenwand 20 und Deckenwand 17 einen offenen Querschnitt, dessen Höhe dem Abstand zwischen den Stirnflächen 13, 15 entspricht. Im Bereich der Einfüllöffnung 18 ist die Deckenwand 17 mit der oberen Stirnfläche 13 und die Bodenwand 20 mit der unteren Stirnfläche 15 verbunden. Der vordere Abschnitt des Presskanals 19, der am Ende der Einfüllöffnung 18 beginnt, ist als ein Beschickungsrohr 36 ausgebildet, das denselben Durchmesser wie die Bodenwand 20 besitzt und zu einem nicht gezeigten Verbrennungsofen führt.

Die Stufe zwischen der Deckenwand 17 und dem Beschickungsrohr 36 ist von einer Stirnplatte 37 abgeschlossen. Diese trägt auf ihrer dem hinteren Presskanalabschnitt zugewandten Seite ein der Kolbenrundung angepasstes Übergangsstück 38, welches den rechteckigen Querschnitt der Deckenwand 17 auf den runden Beschikkungsrohrquerschnitt verkleinert. Das Übergangsstück 38 weist an der Unterkante eine vom Beschickungsrohr 36 weg nach oben ansteigende Schräge auf. Einerseits führt es den Kolben 23 bei der Bewegung in das Beschickungsrohr 36, andererseits bildet es eine Gegenschneide zum Abtrennen von Material aus dem Kanalraum über dem Kolben 23.

Die Einfüllöffnung 18 ist nach vorn durch ein in vertikaler Ebene verlaufendes Messer 32 begrenzt, welches an der Deckenwand 17 mit Schrauben 34 befestigt ist und dessen Schneide 33 auf Kolbenoberkantenhöhe beginnt und schräg auf Kolbenunterkantenniveau abfällt. Die Messerunterseite durchsetzt einen Schlitz in der unteren Stirnfläche 15.

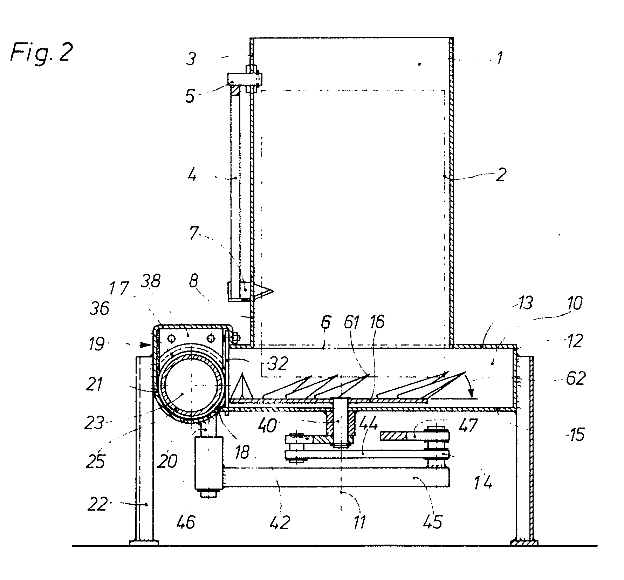

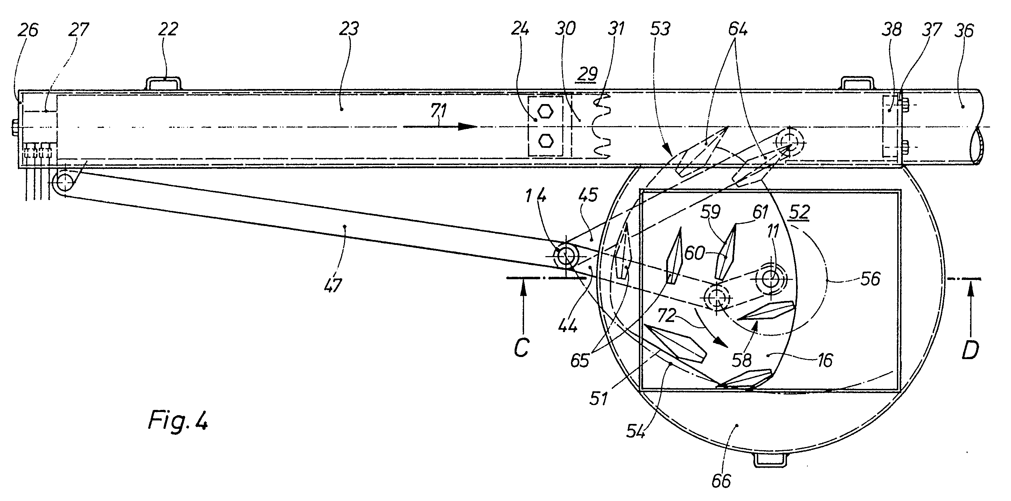

Der Kolben 23 besteht aus einem Hohlzylinder 25 und einer Kolbenstirnwand 30. Seine Länge ist grösser als die Länge der Einfüllöffnung 18. Er ist auf der Bodenwand 20 gleitend gelagert und wird von oben durch ein an der Deckenwand 17 befestigtes Führungsstück 24 geführt, dessen Führungsfläche der Kolbenrundung angepasst ist. Zwischen Kolben 23 und Presskanalstirnseite 26 ist in dem Hohlzylinder 25 ein in zwei Richtungen mit Drucköl beaufschlagbarer Druckzylinder 27 angeordnet, welcher den Kolben zwischen einer vorderen Stellung 28 (Fig. 2, 3) und einer hinteren Stellung 29 (Fig. 1, 4) hin- und herbewegt, wobei in beiden Stellungen 28, 29 die Kolbenstirnwand 30 ausserhalb der Einfüllöffnung 18 liegt. Die Kolbenstirnwand 30 weist entlang ihres Umfanges eine durch keilförmige Ausnehmungen gebildete Schneide 31 auf. Diese wirkt während der Kolbenbewegung aus der hinteren 29 in die vordere Stellung 28 zuerst mit dem Messer 32 zusammen und dann mit dem Übergangsstück 38.

Im folgenden ist die Kratzplatte 16 und deren Antrieb beschrieben. Die Kratzplatte 16 hat eine dreieckförmige Gestalt mit einer Grösse, die etwa einem Viertel der Zylinderstirnflächen 13, 15 entspricht und ist unmittelbar oberhalb der unteren Stirnfläche 15 angeordnet. An der Kratzplattenunterseite ist etwa auf halber Länge einer gekrümmten Dreieckseite 39 ein Zapfen 40 befestigt, der die Stirnfläche 15 koaxial zur Mittelachse 11 durchsetzt und in einer Nabe 41 unterhalb der Stirnfläche 15 gelagert ist. Auf dem Zapfenende ist eine Kurbel 42 mit einem Querstift 43 befestigt. Die Kurbel 42 ist über eine Koppel 44 mit einer Schwinge 45 gelenkig verbunden, die auf einem Zapfen 46 drehbar gelagert ist, der an der Unterseite der Bodenwand 20 angeschweisst ist. Das so gebildete Viergelenkgetriebe 42, 44, 45 ist über eine Stange 47, die einerseits im Koppelgelenk 14 angreift und andererseits mit einem Bolzen 48 in zwei am Kolben 23 angeschweissten Laschen 49 angelenkt ist, mit dem Kolben 23 verbunden. Die Lage des Zapfens 46 und die Längen der Kurbel 42, der Koppel 44 und der Schwinge 45 sind so gewählt, dass die Kratzplatte 16 bei vorderer Kolbenstellung 28 eine Lage 50 (Fig. 3) einnimmt, in der eine gerade Dreiecksseite 51 in der Einfüllöffnung 18 liegt, während die Kratzplatte 16 bei hinterer Kolbenstellung 29 eine Lage 52 (Fig. 4) einnimmt, in der ein Kratzplattenabschnitt 53 über die Einfüllöffnung 18 hinaus in den Presskanal 19 hineinragt. Das Viergelenkgetriebe 42, 44, 45 ist ferner so ausgelegt, dass sich die Kratzplatte 16 bei Bewegung des Kolbens aus seiner hinteren 29 in die vordere Stellung 28 zunächst schnell aus dem Presskanal 19 zurückbewegt, während die Kratzplatte 16 in der vorderen Kolbenstellung 28 eine Totpunktlage (Decklage von Schwinge 45 mit Koppel 44) durchfahren hat. Während der Bewegung beschreibt das Koppelgelenk 14 einen Teilkreis 54 und das Koppelgelenk 55 einen kleineren Teilkreis 56.

Auf der Kratzplatte 16 sind mehrere Reisszinken 58 befestigt. Jeder Reisszinken 58 (Fig. 4) besteht aus einem gleichschenkligen Winkelstahl, dessen beide Schenkel 59 auf einem Drittel der Länge, beginnend von der Unterkante, zum kurzen Ende hin bis kurz unter den Scheitel 60 und von der Unterkante zum langen Ende hin bis zum Scheitel 60 abgeschnitten sind, so dass eine Spitze 61 gebildet wird. Die Reisszinken 58 sind am stumpfabgeschnittenen Schenkeldrittel auf der Kratzplatte 16 aufgeschweisst, wobei ihre Spitzen 61 mit der Kratzplatte 16 einen Winkel 62 von etwa 40° (Fig. 2) einschliessen und bei Drehung der Kratzplatte 16 in Richtung des Pfeiles 63 (Fig. 3) in gleicher Drehrichtung nach vorne gerichtet sind und sich auf unterschiedlichen Teilkreisen um die vertikale Mittelachse 11 bewegen. In der Kratzplattenlage 52 (Fig. 4) ragt eine erste Reisszinkengruppe 64 bis in den Presskanal 19 hinein, während die Förderrichtung einer mittleren Reisszinkengruppe 65 etwa senkrecht zur Presskanallängsrichtung verläuft. Die äusseren Reisszinken der Reisszinkengruppen 64, 65 bewegen sich in der Nähe des Zylindermantels 12 und dienen der Räumung der Zylinderraumsegmente 66. Entlang der geraden Dreieckseite 51 sind hintereinander versetzt zwei weitere Reisszinken 67, 68 angeordnet. Beide Reisszinken 67, 68 befinden sich bei Kratzplattenlage 50 seitlich benachbart zur Einfüllöffnung 18, wovon der Reisszinken 68 dicht neben dem Messer 32 verläuft.

Die Arbeitsweise der Vorrichtung ist wie folgt:
Im Schacht 1 befindet sich ein Strohballen 2. Die Stange 4 mit der Messerklinge 7 ist mit der Kolbenbewegung über einen nicht dargestellten Seilzug verbunden, so dass die Messerklinge 7 bei Kolbenbewegung parallel zur Schachtwandung 3 gegenläufig zum Kolben 23 zwangsläufig hin- und herpendelt. Dabei wird die Ballenumschnürung 9 aufgetrennt und der Ballen entspannt sich.

Erreicht der Kolben 23 seine vordere Stellung 28 (Fig. 3), nimmt die Kratzplatte 16 die Lage 50 ein. Bei Bewegung des Kolbens 23 in Richtung des Pfeiles 70 bewegt sich die Kratzplatte 16 zunächst langsam in Pfeilrichtung 63. Dabei stechen die Spitzen 61 der Reisszinken 58 in die Ballenunterseite ein, reissen das Stroh los und nehmen eine bestimmte Strohmenge mit. Vor dem Erreichen der hinteren Kolbenstellung 29 führt die Kratzplatte 16 eine schnelle Bewegung aus und drückt dabei die Strohmenge durch die Einfüllöffnung 18 in den Presskanal 19. Hat der Kolben 23 seine hintere Stellung 29 erreicht (Fig. 4), wird die Bewegung umgekehrt und der Kolben 23 bewegt sich in Pfeilrichtung 71, wobei die Kratzplatte 16 zunächst schnell in Pfeilrichtung 72 zurück verschwenkt wird. Dabei verdichtet der Kolben 23 das im Presskanal 19 befindliche Stroh während die Reisszinken 58 ohne Mitnahmewirkung entlang der Ballenunterseite streichen. Beim Vorbeilaufen der Kolbenschneide 31 am gestellfesten Messer 32 (Fig. 3) wird ausserhalb des Presskanals 19 befindliches Stroh von dem Stroh im Presskanal getrennt. Dabei erreicht die Kratzplatte 16 die Lage 50 und die Reisszinken 67, 68 erfassen das abgetrennte Stroh. Beim Einlaufen der Kolbenschneide 31 in das Beschickungsrohr 36 wird das im oberen Presskanalbereich befindliche Stroh am Übergangsstück 38 abgetrennt. Hat der Kolben 23 seine vordere Stellung 28 erreicht, wird die Bewegung erneut umgekehrt und der Kolben bewegt sich zurück in Pfeilrichtung 70. Im Beschickungsrohr 36 befindet sich eine Presspackung 69. Während der Zurückbewegung 70 des Kolbens 23 bewegt sich die Kratzplatte 16 in Pfeilrichtung 63, dabei nehmen die Reisszinken 67, 68 das am Messer 32 abgetrennte Stroh mit und fördern es mit dem von den weiteren Reisszinken 64, 65 von der Ballenunterseite abgelösten Stroh in den Presskanal 19. Das im oberen Presskanalbereich am Übergangsstück 38 abgetrennte Stroh ist inzwischen auf den Presskanalboden gefallen und wird beim nächsten Verdichtungszyklus vom Kolben 23 mitgenommen und verdichtet. Ist etwa die halbe Höhe des Strohballens 2 abgearbeitet, schaltet eine nicht dargestellte Lichtschranke den Kratzboden ein und der nächste Strohballen wird in den Schacht 1 gefördert.

Die Dichte der Presspackungen 69 ist durch die Länge des Beschickungsrohres 36 beeinflussbar. Der Durchsatz durch die Beschickungsvorrichtung wird in Abhängigkeit vom Wärmebedarf des Verbrennungsofens durch die Kolbenhubzahl pro Zeiteinheit gesteuert.

**Patentansprüche**

1. Beschickungsvorrichtung für Stroh-Verbrennungsanlagen mit einer Ballenvorratseinrichtung (1) und einem Ballenauflöser (16), welcher das aufgelöste Stroh durch eine Einfüllöffnung (18) einem horizontalen Presskanal (19) senkrecht zu dessen Längsrichtung zuführt, in dem ein Kolben (23) hin- und herbewegbar ist, welcher das aufgelöste Stroh verdichtet und zum Verbrennungsofen fördert, wobei die Bewegungen von Ballenauflöser (16) und Kolben (23) zeitlich aufeinander abgestimmt sind, dadurch gekennzeichnet, dass seitlich neben dem Presskanal (19) ein vertikaler Schacht (1) zur Strohballenaufnahme angeordnet ist und unterhalb des Schachtes (1) eine um eine vertikale Achse (11) hin und her drehbare Kratzplatte (16) mit in nur einer Drehrichtung (63) wirksamen Reisszähnen (58) zum Angriff am darüberliegenden Strohballen (2) vorgesehen ist, welche bei der Zurückbewegung des Kolbens (23) aus seiner vorderen Stellung (28) in die hintere Stellung (29) das Stroh von der Ballenunterseite abschürft und durch die Einfüllöffnung (18) in den Presskanal (19) schiebt.

2. Beschickungsvorrichtung nach Anspruch 1, dadurch gekennzeichnet, dass die Reisszähne (58) der Kratzplatte (16) als spitze Reisszinken (59–61) ausgebildet sind, die in spitzem Winkel (62) in die abzulösende Ballenoberfläche eingreifen.

3. Beschickungsvorrichtung nach Anspruch 1 oder 2, dadurch gekennzeichnet, dass der Antrieb der Kratzplatte (16) mit dem Kolbenantrieb mechanisch gekoppelt ist.

4. Beschickungsvorrichtung nach Anspruch 3, dadurch gekennzeichnet, dass sich bei Kolbenbewegung aus der hinteren Stellung (29) nach vorn die Kratzplatte (16) zunächst schnell aus dem Presskanal (19) zurückbewegt, während sie im Bereich der vorderen Stellung (28) eine langsame Bewegung durchführt, und dass im Antrieb der Kratzplatte (16) eine Überlastsicherung angeordnet ist.

5. Beschickungsvorrichtung nach einem der Ansprüche 1 bis 4, dadurch gekennzeichnet, dass die Kratzplatte (16) bei hinterer Kolbenstellung (29) eine Lage (52) einnimmt, in der eine Reisszinkengruppe (64) in den Presskanal (19) hineinragt und die Förderrichtung einer weiteren Reisszinkengruppe (65) etwa senkrecht zur Presskanallängsrichtung verläuft.

6. Beschickungsvorrichtung nach einem der Ansprüche 1 bis 4, dadurch gekennzeichnet, dass die Kratzplatte (16) während der Bewegung des Kolbens (23) in seine vordere Stellung (28) eine Lage (50) einnimmt, in der sich wenigstens ein Reisszinken (67, 68) seitlich benachbart zu einem am vorderen Ende der Einfüllöffnung (18) an der Deckenwand (17) befestigten, mit dem Kolben (23) zusammenwirkenden Messer (32) befindet, und dass dieser Reisszinken bei seiner Rückbewegung etwa am Messer (32) hängendes Stroh erfasst und erneut zur Einfüllöffnung (18) fördert.

7. Beschickungsvorrichtung nach einem der Ansprüche 1 bis 6, dadurch gekennzeichnet, dass die Kratzplatte (16) in einem vertikalen Zylinderraum (10) um eine zur Mittelachse (11) des Zylinderraumes koaxiale Achse schwingend angeordnet ist.

8. Beschickungsvorrichtung nach Anspruch 7, dadurch gekennzeichnet, dass der untere Bereich des Schachtes (1) in den Zylinderraum (10) einmündet und dass der Schacht (1) einen Ballen (2) in vertikaler Richtung nach unten gleitbar führt, während der Ballen (2) um die vertikale Achse nicht drehbar ist.

9. Beschickungsvorrichtung nach Anspruch 7 oder 8, dadurch gekennzeichnet, dass sich der Zylinderraum (10) seitlich an den Presskanal (19) anschliesst und in die Einfüllöffnung (18) des Presskanals (19) mündet.

10. Beschickungsvorrichtung nach einem der Ansprüche 1 bis 9, dadurch gekennzeichnet, dass der Presskanalquerschnitt im Bereich der Einfüllöffnung (18) nach oben vergrössert ist und im Anschluss an die Einfüllöffnung (18) durch ein als Gegenschneide ausgebildetes und mit dem Kolben (23) zusammenwirkendes Übergangsstück (38) auf Beschickungsrohrquerschnitt verkleinert ist.

11. Beschickungsvorrichtung nach einem der Ansprüche 1 bis 10, dadurch gekennzeichnet, dass im unteren Bereich und innerhalb des Schachtes (1) ein gegenläufig zum Kolben (23) zwangsläufig hin- und herbewegbares Messer (7) zum Aufschneiden der Ballenumschnürung (9) des Strohballens (2) angeordnet ist.

**Claims**

1. Feed device for straw-burning apparatus with a bale storage arrangement (1) and a bale loosening device (16), which passes the loosened straw through a charging opening (18) to a horizontal pressing channel (19) normal to its longitudinal direction, in which a piston (23) is movable back and forth, which compacts the loosened straw and conveys it to the combustion furnace, the movements of the bale loosening device (16) and the piston (23) being co-ordinated with each other in terms of time, characterised in that a vertical shaft (1) is arranged laterally adjacent to the pressing channel (19) to receive the straw bale and beneath the shaft (1) there is provided a scraping plate (16), which is rotatable back and forth about a vertical axis (11), with tearing teeth (58) which are effective only in one direction of rotation (63), for engagement on the straw bale (2) lying above, which plate on the return movement of the piston (23) from its forward position (28) into the rearward position (29) scratches off the straw from the underside of the bale and pushes it through the charging opening (18) into the pressing channel (19).

2. Feed device according to Claim 1, characterised in that the tearing teeth (58) of the scraping plate (16) are constructed as pointed tearing prongs (59–61), which engage at an acute angle (62) into the bale surface which is to be detached.

3. Feed device according to Claim 1 or 2, characterised in that the drive of the scraping plate (16) is mechanically coupled with the piston drive.

4. Feed device according to Claim 3, characterised in that on movement of the piston from the rearward position (29) forward, the scraping plate (16) firstly moves quickly back out of the pressing channel (19), whilst in the region of the forward position (28) it performs a slow movement, and that an overload safety device is arranged in the drive of the scraping plate (16).

5. Feed device according to one of Claims 1 to 4, characterised in that at the rearward piston position (29), the scraping plate (16) assumes a position (52), in which a group of tearing prongs (64) projects into the pressing channel (19) and the conveying direction of a further group of tearing prongs (65) runs approximately normal to the longitudinal direction of the pressing channel.

6. Feed device according to one of Claims 1 to 4, characterised in that during the movement of the piston (23) into its forward position (28), the scraping plate (16) assumes a position (50), in which at least one tearing prong (67, 68) is situated laterally adjacent to a blade (32), which is attached to the cover wall (17) at the forward end of the charging opening (18) and which co-operates with the piston (23), and that this tearing prong on its return movement takes up straw hanging for instance on the blade (32) and conveys it again to the charging opening (18).

7. Feed device according to one of Claims 1 to 6, characterised in that the scraping plate (16) is arranged to swing in a vertical cylindrical chamber (10) about an axis coaxial with the central axis (11) of the cylindrical chamber.

8. Feed device according to Claim 7, characterised in that the lower region of the shaft (1) opens into the cylindrical chamber (10) and that the shaft (1) guides a bale (2) slidably downwards in the vertical direction, whilst the bale (2) is not rotatable about the vertical axis.

9. Feed device according to Claim 7 or 8, characterised in that the cylindrical chamber (10) laterally adjoins the pressing channel (19) and opens into the charging opening (18) of the pressing channel (19).

10. Feed device according to one of Claims 1 to 9, characterised in that the pressing channel cross-section is upwardly enlarged in the region of the charging opening (18) and where it joins on to the charging opening (18) is reduced to the cross-section of the feed tube through a transition piece (38) which is constructed as a counter cutting edge and co-operates with the piston (23).

11. Feed device according to one of Claims 1 to 10, characterised in that in the lower region and within the shaft (1) a blade (7) is arranged, which is movable back and forth automatically in the opposite direction to the piston (23), to cut up the bale binding (9) of the straw bale (2).

**Revendications**

1. Dispositif d'alimentation pour installation de combustion de paille comportant un dispositif (1) pour recevoir les bottes de paille et un dispositif (16) pour défaire les bottes, qui amène la paille desserrée par une ouverture de remplissage (18) d'un canal de pressage horizontal (19) perpendiculairement à l'axe longitudinal de ce dernier, dans lequel un piston (23) mobile en va-et-vient comprime la paille desserrée et la pousse vers le four de combustion, les mouvements du dispositif pour défaire les bottes (16) et du piston (23) étant synchronisés, caractérisé en ce qu'un puits vertical (1) destiné à recevoir les bottes de paille est disposé à proximité latérale du canal de pressage (19), un plateau râcleur (16), mobile en va-et-vient rotatif autour d'un axe vertical (11) et possédant des dents d'arrachement (58) actives uniquement dans un seul sens de rotation (63) est disposé sous le puits (1) pour attaquer la botte de paille (2) se trouvant au-dessus de lui, plateau qui arrache la paille de la face inférieure de la botte et la pousse dans le canal de pressage (19) par l'ouverture de remplissage (18) lors du retour du piston (23) de sa position avant (28) à sa position arrière (29).

2. Dispositif d'alimentation selon la revendication 1, caractérisé en ce que les dents d'arrachement (58) du plateau râcleur (16) ont la forme de pointes d'arrachement aigues, qui pénètrent sous un angle aigu (62) dans la surfache de la botte à défaire.

3. Dispositif d'alimentation, selon l'une des revendications 1 ou 2, caractérisé en ce que l'entrainement du plateau râcleur (16) est couplé mécaniquement avec l'entrainement du piston.

4. Dispositif d'alimentation selon la revendication 3, caractérisé en ce que lors du déplacement du piston vers l'avant à partir de sa position arrière, le plateau râcleur (16) se déplace d'abord rapidement en arrière hors du canal de pressage (19) alors qu'il exécute un déplacement lent dans la zône de la position avant (28), et en ce qu'un dispositif de sécurité contre la surcharge est incorporé dans l'entrainement du plateau râcleur (16).

5. Dispositif d'alimentation selon l'une des revendications 1 à 4, caractérisé en ce qu'en position arrière (29) du piston le plateau râcleur (16) prend une position (52) dans laquelle un groupe de dents d'arrachement (64) pénètre dans le canal de pressage (19), et la direction de transport d'un autre groupe de dents d'arrachement (65) s'étend sensiblement perpendiculaire à l'axe longitudinal du canal de pressage.

6. Dispositif d'alimentation selon l'une des revendications 1 à 4, caractérisé en ce que le plateau râcleur (16) prend, durant le mouvement du piston (23) vers sa position avant (28), une position (50) dans laquelle au moins une dent d'arrachement (67, 68) se trouve latéralement au voisinage d'un couteau (32) fixé sur le couvercle (17) à l'extrémité avant de l'ouverture de remplissage (18) et coopérant avec le piston (23), et en ce que, lors de son mouvement de retour ladite dent d'arrachement saisit la paille pouvant être accrochée au couteau (32) pour la ramener vers l'ouverture de remplissage (18).

7. Dispositif d'alimentation selon l'une des revendications 1 à 6, caractérisé en ce que le plateau râcleur (16) est disposé dans une chambre cylindrique (20) verticale et peut tourner en va-et-vient autour d'un axe coaxial à l'axe central (11) de la chambre cylindrique.

8. Dispositif d'alimentation selon le revendication 7, caractérisé en ce que la zône inférieure du puits (1) débouche dans la chambre cylindrique (10) et en ce que le puits (1) guide une botte (2) vers le bas en la laissant glisser verticalement, alors que ladite botte est empêchée de tourner autour de l'axe vertical.

9. Dispositif d'alimentation selon l'une des revendications 7 ou 8, caractérisé en ce que la chambre cylindrique (10) se raccorde latéralement au canal de pressage (19) et débouche dans l'ouverture de remplissage (18) dudit canal (19).

10. Dispositif d'alimentation selon l'une des revendications 1 à 9, caractérisé en ce que la section transversale du canal de pressage est agrandie vers le haut dans la zône de l'ouverture de remplissage (18) et, au niveau de son raccordement avec l'ouverture de remplissage (18), diminue jusqu'à la section transversale du tube d'alimentation au moyen d'une pièce de transition (38) conçue comme contrelame et coopérant avec le piston (23).

11. Dispositif d'alimentation selon l'une des revendications 1 à 10, caractérisé en ce qu'un couteau (7) animé d'un mouvement de va-et-vient forcé, opposé à celui di piston (23), est disposé à l'intérieur du puits (1) et dans sa zône inférieure pour couper le ficelage (9) de la botte de paille (2).

Fig. 2

Fig. 3

0 117 297

Fig. 4

0 117 297